# EUROPÄISCHE PATENTANMELDUNG

(11) **EP 1 096 355 A2**
(43) Veröffentlichungstag der Anmeldung: **02.05.2001**
(21) Anmeldenummer: 00119399.4
(22) Anmeldetag: 12.09.2000
(51) Int. Cl.: G05G 1/14, B60K 26/02

(54) **Pedalanordnung für Kraftfahrzeuge**

(30) Priorität: 29.10.1999 DE 19952228
(71) Anmelder: Volkswagen Aktiengesellschaft, 38436 Wolfsburg (DE)
(72) Erfinder: Wohllebe, Thomas Dipl.-Ing., 38110 Braunschweig (DE); Sinnhuber, Ruprecht Dipl.-Ing., 38518 Gifhorn (DE)

(57) **Zusammenfassung**

Pedalanordnungen mit in Fahrzeuglängsrichtung verfahrbaren Pedalen sind bekannt. Hierdurch soll eine für den Fahrer ergonomische Pedalposition eingestellt werden können. Nachteilig hierbei ist, daß beispielsweise Bremsdruckstangen zum Ausgleich der veränderten Pedalposition zur Spritzwand längenveränderlich ausgebildet werden müssen, wodurch sich der konstruktive Aufwand und der Fertigungsaufwand erhöht. Darüber hinaus können im Falle einer Spritzwandintrusion durch Verkehrsunfall die Pedale in den freien Fußraum des Fahrers hineingeschwenkt werden, wodurch der Überlebensraum des Fahrers im Fußraum verkleinert und somit das Verletzungsrisiko erhöht wird. Zur Vermeidung dieses Nachteils ist ein Pedal (1) der erfindungsgemäßen Pedalanordnung an einem in Fahrzeuglängsrichtung verschiebbaren Schlitten (6) gelagert, an dem auch eine Betätigungseinrichtung, beispielsweise ein Hauptbremszylinder (2,23), ein Kupplungsgeberzylinder (2), ein Kupplungsbowdenzug (22) oder ein Gaszug, gehalten ist. Hierdurch wird die Betätigungseinrichtung immer gemeinsam mit dem Pedal (1) verfahren, so daß sich die Relativposition zwischen Pedal (1) und Betätigungseinrichtung nicht ändert. Ein Längenausgleich oder dergleichen kann somit entfallen. Darüber hinaus ist die Betätigungseinrichtung von einer Fahrzeugspritzwand (20) entkoppelt, so daß infolge Spritzwandintrusion bei einem Verkehrsunfall keine Schwenkbewegung des Pedals (1) in den freien Fußraum erfolgt.

## Beschreibung

Die Erfindung betrifft eine Pedalanordnung für Kraftfahrzeuge mit einem an einen in Fahrzeugrichtung verschiebbaren Schlitten gehaltenen Pedal zum Bedienen einer Betätigungseinrichtung, beispielsweise eines Hauptbremszylinders, eines Kupplungsgeberzylinders, eines Kupplungsbowdenzugs oder eines Gaszugs, des Kraftfahrzeugs.

Eine derartige Pedalanordnung ist aus der EP 0 471 791 D1, EP 0 363 546 A1 oder EP 0 265 466 A2 bekannt. Den aus diesen Veröffentlichungen bekannten Pedalanordnungen ist gemeinsam, daß das Pedal jeweils schwenkbar an einem Schlitten gelagert ist, der durch einen Spindeltrieb in Fahrzeuglängsrichtung zum Fahrer hin bzw. vom Fahrer weg verfahrbar ist. Der Sinn liegt darin, das Pedal näher an einen kleinen Fahrer heran bzw. weiter von einem großen Fahrer weg zu positionieren, so daß Fahrer unterschiedlicher Körpergröße stets eine ergonomische Sitzposition im Fahrzeug einnehmen können. Kleine Fahrer müssen nämlich oft den Fahrzeugsitz sehr weit nach vorne verschieben, um die üblicherweise starr im Fahrzeug angeordneten Pedale noch erreichen zu können. Hierdurch sitzen sie auch oft sehr nah mit dem Oberkörper am Lenkrad, wodurch sich eine ergonomisch ungünstige Sitzposition ergibt. Aufgrund der verschiebbaren Pedale ist es dem Fahrer möglich, zunächst eine in bezug auf den Abstand zum Lenkrad bequeme Sitzposition einzustellen und sodann die Pedalposition in eine ergonomisch bequeme Stellung zu bringen.

Nachteilig bei den vorgenannten Vorrichtungen ist, daß eine durch das Pedal zu bedienende Betätigungseinrichtung, beispielsweise ein Hauptbremszylinder, ein Kupplungsgeberzylinder, ein Kupplungsbowdenzug, ein Gaszug oder ähnliche Einrichtungen, an der Spritzwand gelagert sind. So ist bei den in den eingangs genannten Schriften gezeigten Beispielen für ein Bremspedal eine Bremsdruckstange zum Betätigen des Hauptbremszylinders längenveränderlich ausgebildet, um jeweils die Länge der Bremsdruckstange an den Abstand des Bremspedals von der Spritzwand einzustellen. Ein Bowdenzug für den Gaszug des in der EP 0 363 546 A1 gezeigten Beispiels weist einen Mantel auf, der an einem Ende an der Spritzwand gehalten ist. Der Draht des Bowdenzugs ist über eine Umlenkscheibe am Gaspedal befestigt, wobei die Umlenkscheibe zusammen mit dem Gaspedal derart verfahrbar ist, daß die freie Länge des Drahts in Ruhestellung bei jeder beliebigen Pedalstellung konstant ist. Durch die vorgenannten Kontruktionen sind die Pedalanordnungen nach dem Stand der Technik kompliziert und aufwendig zu fertigen, wodurch auch die Fertigungskosten erhöht sind. Durch die Anbringung des Hauptbremszylinders an der Spritzwand werden bei durch einen Verkehrsunfall bedingter Spritzwandintrusion das Bremspedal zusätzlich in Richtung auf den Fahrer geschwenkt, wodurch der Überlebensraum für den Fahrer im Fußbereich zusätzlich verkleinert und damit das Verletzungsrisiko erhöht wird.

Hiervon ausgehend liegt der Erfindung das Problem zugrunde, eine Pedalanordnung mit verschiebbaren Pedalen zu schaffen, die einfach und kostengünstig zu fertigen ist und durch die das Verletzungsrisiko für den Fahrer im Falle eines Verkehrsunfalls verringert ist.

Zur Lösung dieses Problems ist die erfindungsgemäße Pedalanordnung dadurch gekennzeichnet, daß die Betätigungseinrichtung ebenfalls an dem verschiebbaren Schlitten gehalten ist.

Erfindungsgemäß wird somit die Betätigungseinrichtung, beispielsweise der Hauptbremszylinder, der Kupplungsgeberzylinder, der Kupplungsbowdenzug, der Gaszug oder eine ähnliche Einrichtung, mit dem Pedal an einem gemeinsamen, verschiebbaren Schlitten gehalten. Die Betätigungseinrichtung wird also auch gemeinsam mit dem Schlitten verfahren. Die Relativposition von Betätigungseinrichtung und Pedal ist somit bei jeder Pedalstellung unverändert, so daß ein konstruktiv einfacherer Pedalanbau gewährleistet ist. Darüber hinaus ist durch die erfindungsgemäße Maßnahme ein beispielsweise Bremszylinder von der Spritzwand entkoppelt, so daß bei einer Spritzwandintrusion infolge eines Verkehrsunfalls ein zusätzliches Verschwenken des Bremspedals zum Fahrer hin nicht erfolgt. Der Überlebensraum für den Fahrer wird im Fußbereich somit nicht zusätzlich verkleinert, so daß auch das Verletzungsrisiko verringert ist.

An dem Schlitten können nach einer Weiterbildung der Erfindung ein Gaspedal, ein Bremspedal und gegebenenfalls, soweit es sich nicht um Kraftfahrzeuge mit Automatikgetriebe handelt, ein Kupplungspedal angeordnet sein. Vorzugsweise ist an dem Schlitten auch eine Fußablage angebracht. Gaspedal, Bremspedal und gegebenenfalls Kupplungspedal und Fußablage können somit vom Fahrer gemeinsam verfahren werden, so daß sich der Aufwand zum Einstellen der Pedalpositionen reduziert.

Zum Verfahren des Schlittens können nach einer konstruktiven Ausgestaltung der Erfindung ein Spindeltrieb oder ein Druckmittelzylinder, beispielsweise ein Hydraulikzylinder oder ein Pneumatikzylinder, eingesetzt werden. Um den Überlebensraum für den Fahrer im Falle eines Verkehrsunfalls zu erhöhen, ist nach einer weiteren Ausgestaltung der Erfindung vorgesehen, daß der Schlitten im Falle eines Verkehrsunfalls derart bewegbar, insbesondere verschwenkbar, ist, daß das Pedal bzw. die Pedale vom Fahrer weg zur Spritzwand bewegbar, insbesondere schwenkbar, ist/sind.

Die Erfindung wird nachfolgend anhand von in den Zeichnungen dargestellten Ausführungsbeispielen näher erläutert. Es zeigen:
- Fig. 1: ein erstes Ausführungsbeispiel einer Pedalanordnung mit den Erfindungsmerkmalen in Seitenansicht,
- Fig. 2: ein zweites Ausführungsbeispiel einer Pedalanordnung mit den Erfindungsmerkmalen in Seitenansicht,
- Fig. 3: ein drittes Ausführungsbeispiel einer Pedalanordnung mit den Erfindungsmerkmalen in perspektivischer Darstellung,
- Fig. 4: ein viertes Ausführungsbeispiel einer Pedalanordnung mit den Erfindungsmerkmalen in Seitenansicht,
- Fig. 5: die Pedalanordnung gemäß Fig. 4 in Draufsicht,
- Fig. 6: ein weiteres Ausführungsbeispiel einer Pedalanordnung mit den Erfindungsmerkmalen in Vorderansicht,
- Fig. 7: die Pedalanordnung gemäß Fig. 6 in Seitenansicht.

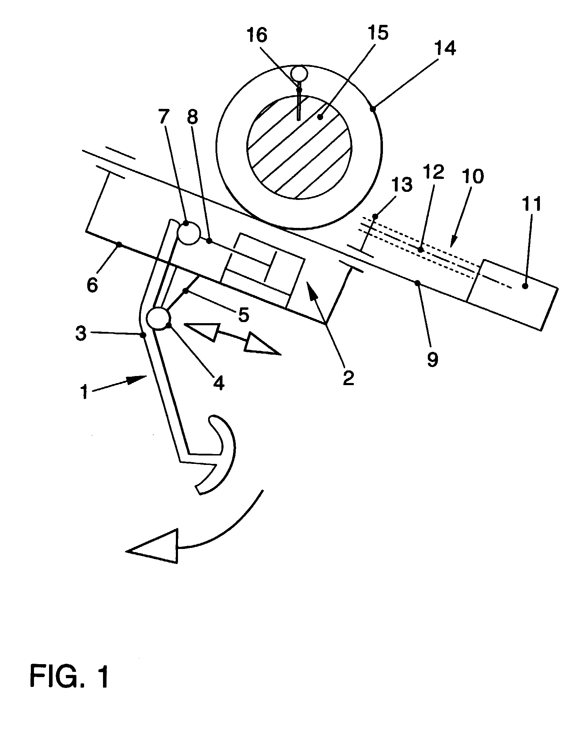

Fig. 1 zeigt das Beispiel einer Pedalanordnung für ein Pedal 1, das hier ein Kupplungs- oder Bremspedal sein kann, welches mit einem Zylinder 2, der hier entsprechend ein Kupplungsgeberzylinder oder ein Hauptbremszylinder ist, zusammenwirkt. Das Pedal 1 weist einen zweiarmigen Hebel 3 auf, der über ein Gelenk 4 und einen Steg 5 an einem Schlitten 6 gelagert ist. An seinem oberen freien Ende ist der Hebel 3 des Pedals 1 über ein Gelenk 7 mit einer Druckstange 8 zum Betätigen des Zylinders 2 verbunden.

Der Schlitten 6 ist verschiebbar an einer Führung 9 gelagert. Die Führung 9 erstreckt sich zum Fahrer hin schräg nach unten und in Fahrzeuglängsrichtung. Hierdurch wird auch der Schlitten 6 in etwa in Fahrzeuglängsrichtung verschoben. Dieses erfolgt im vorliegenden Fall über einen Spindeltrieb 10, der eine durch einen Motor 11 um ihre Längsachse rotierbare Gewindespindel 12 aufweist, die ihrerseits mit einer Spindelmutter 13 am Schlitten 6 zusammenwirkt. Alternativ ist hier aber selbstverständlich auch eine Druckmittelzylindereinheit, beispielsweise durch einen Hydraulikzylinder oder einen Pneumatikzylinder, zum Verschieben des Schlittens 6 möglich.

Der Zylinder 2 ist ebenfalls am Schlitten 6 angebracht und wird somit gemeinsam mit dem Pedal 1 verfahren. Relativposition von Pedal 1 und Zylinder 2 ändern sich somit nicht, so daß ein Längenausgleich oder ähnliches der Druckstange 8 entfällt.

Die Führung 9 ist im vorliegenden Fall an einer rohrartigen Muffe 14 befestigt, die an einem Querrohr 15 gelagert ist. Ein Scherstift 16 verhindert, daß sich die Muffe 14 und damit die Führung 9 gegenüber dem Querrohr 15 verdreht. Der Scherstift 16 ist so ausgelegt, daß er bei infolge eines Verkehrsunfalls auf das Pedal 1 einwirkender erhöhter Fußkraft abschert, so daß sich die Muffe 14 gegenüber dem Querrohr 15 verdrehen kann. Hierdurch wird das Pedal 1 infolge der Fußkraft vom Fahrer weg, zu einer Spritzwand hin geschwenkt. Hierdurch wird der Überlebensraum für den Fahrer im Fußbereich erhöht und somit das Verletzungsrisiko vermindert.

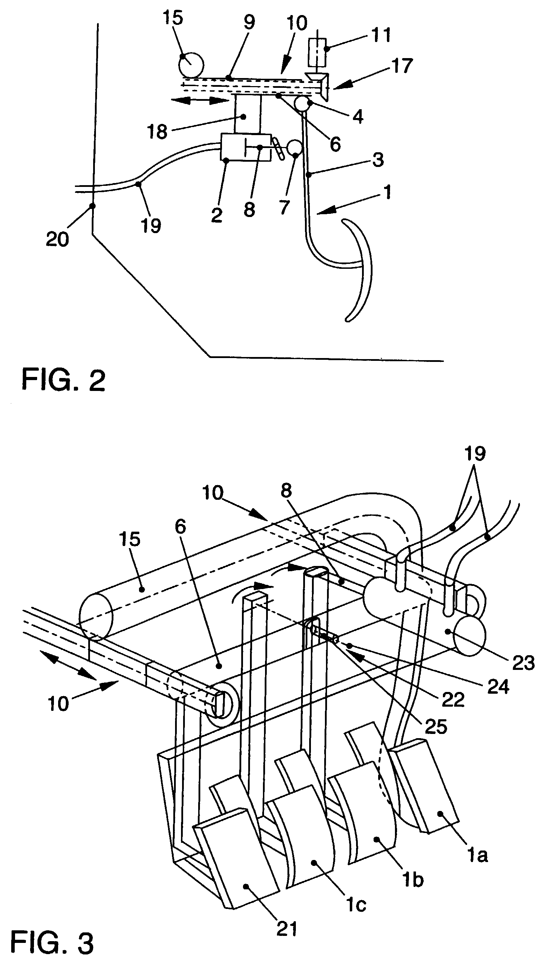

Bei dem in Fig. 2 gezeigten Ausführungsbeispiel weist das Pedal 1 einen einarmigen Hebel 3 auf, der an seinem oberen Ende über ein Gelenk 4 an einem Schlitten 6 gelagert ist. Eine Druckstange 8 ist über ein Gelenk 7 am Hebel 3 angebracht und betätigt einen Zylinder 2, der wiederum ein Hauptbremszylinder oder ein Kupplungsgeberzylinder sein kann. Der Schlitten 6 ist wiederum verfahrbar an einer Führung 9 gelagert, die fest an einem Querrohr 15 angebracht ist. Zum Verfahren dient wiederum ein Spindeltrieb 10, der mittels eines Kegelradgetriebes 17 durch einen Motor 11 antreibbar ist. Alternativ sind hier auch wieder hydraulische oder pneumatische Druckmittelzylinder denkbar.

An dem Schlitten 6 ist auch im vorliegenden Fall der Zylinder 2 über eine Halterung 18 gelagert, so daß der Hauptbremszylinder 2 gemeinsam mit dem Pedal 1 durch den Schlitten 6 entlang der Führung 9 verfahren werden kann. Ferner ist in Fig. 2 noch eine Hydraulikleitung 19 für das Kupplungs- oder Bremssystem erkennbar. Die Hydraulikleitung 19 ist flexibel und durch eine Spritzwand 20 hindurchgeführt. Je nach Abstand des Zylinders 2 von der Spritzwand 20 kann sich die Hydraulikleitung 19 aufgrund ihrer Flexibilität verformen.

Fig. 3 zeigt ein Beispiel, bei der ein Gaspedal 1a, ein Bremspedal 1b, ein Kupplungspedal 1c und eine Fußablage 21 an einem gemeinsamen Schlitten 6 gelagert sind. Der Schlitten 6 ist über zwei Spindeltriebe 10 in Fahrzeuglängsrichtung verfahrbar. Ferner dient der Schlitten 6 als Widerlager für einen Kupplungsbowdenzug 22, einen Zweikreis-Hauptbremszylinder 23 und einen Gaszug (nicht dargestellt). Der Hauptbremszylinder 23 verfügt wiederum über flexible Hydraulikleitungen 19, die durch die Spritzwand hin zum Bremssystem geführt sind. Die Bowdenzüge für den Kupplungsbowdenzug 22 und den Gaszug sind an sich flexibel. Wie in Fig. 3 am Beispiel des Kupplungspedals 1c erkennbar, ist ein Draht 24 des Kupplungsbowdenzugs 22 durch den Schlitten 6 hindurchgeführt, während ein Mantel 25 des Kupplungsbowdenzugs 22 am Schlitten 6 angebracht ist.

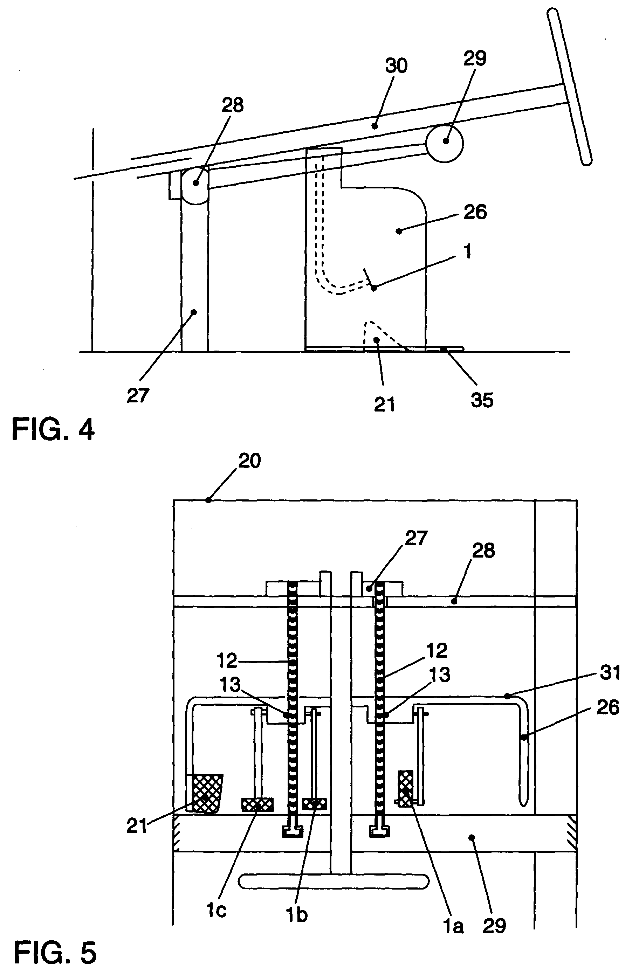

Das in Fig. 4 und 5 gezeigte Ausführungsbeispiel ist dem Ausführungsbeispiel gemäß Fig. 3 sehr ähnlich. Der wesentliche Unterschied besteht darin, daß die Pedale 1 hier zusätzlich in einem gemeinsamen Käfig 26 angeordnet sind. Der Käfig 26 ist an zwei parallel zueinander angeordneten Gewindespindeln 12 verfahrbar. Diese sind an ihrem vorderen, der Spritzwand 20 zugewandten Ende an einer Stütze 27 gelagert, die zudem durch ein Querrohr 28 abgesichert ist. An ihrem vorderen, zum Fahrer hin gewandten Ende sind die Gewindespindeln 12 drehbar in einem weiteren Querrohr 29 gelagert.

Der Käfig 26 kann unten durch einer Bodenplatte 35 verschlossen sein, so daß sich beim Verfahren des Käfigs 26 auch der Boden desselben anhebt bzw. absenkt. Die Höhe der Bodenplatte 35 wird so ebenfall auf die Köpergröße des Fahres abgestimmt. So ist ein Anheben der Bodenplatte 35 für kleine Fahrer vorteilhaft.

Die Gewindespindeln 12 sind im gezeigten Ausführungsbeispiel parallel zu einer Lenksäule 30, nämlich zum Fahrer hin leicht ansteigend, angeordnet. Hierdurch wird auch der Käfig 26 beim Verfahren zum Fahrer hin leicht angehoben. Alternativ können die Gewindespindeln 12 aber auch jede andere Orientierung zur Lenksäule 30, beispielsweise einen exakt horizontalen Verlauf oder einen zum Fahrer hin abfallenden Verlauf, aufweisen.

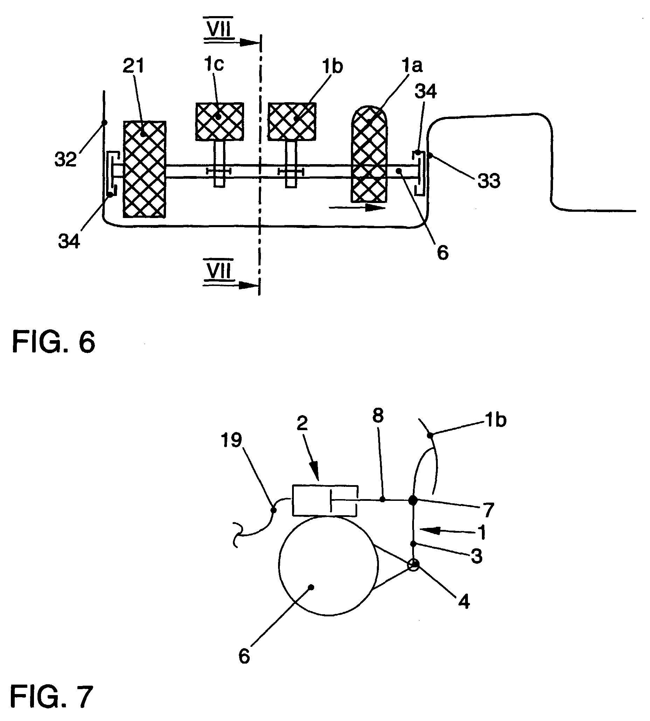

Betätigungseinrichtungen, wie beispielsweise ein Hauptbremszylinder, ein Kupplungsgeberzylinder, ein Kupplungsbowdenzug oder ein Gaszug sind in den Darstellungen gemäß Fig. 5 und 6 aus Gründen der zeichnerischen Vereinfachung weggelassen. Sie sind aber analog zum Ausführungsbeispiel gemäß Fig. 3 an einer Rückwand 31 des Käfigs 26 angebracht.

Auch das Ausführungsbeispiel gemäß Fig. 6 und 7 zeigt eine Pedalanordnung bei der ein Gaspedal 1a, ein Bremspedal 1b, ein Kupplungspedal 1c und eine Fußablage 21 an einem gemeinsamen Schlitten 6 gehalten sind. Der Schlitten 6 ist hier ein in Fahrzeuglängsrichtung verfahrbares Querrohr, das an einer Fahrzeugaußenwand 32 und einem Mitteltunnel 33 in je einer Führung 34 verfahrbar ist. Wie in Fig. 7 erkennbar, sind an dem Schlitten 6 bzw. an dem verfahrbaren Querrohr auch Betätigungseinrichtungen, in Fig. 7 konkret ein Hauptbremszylinder 2, angebracht und gemeinsam mit den Pedalen 1 verfahrbar.

### BEZUGSZEICHENLISTE

- 1: Pedal
- 2: Zylinder
- 3: Hebel
- 4: Gelenk
- 5: Steg
- 6: Schlitten
- 7: Gelenk
- 8: Druckstange
- 9: Führung
- 10: Spindeltrieb
- 11: Motor
- 12: Gewindespindel
- 13: Spindelmutter
- 14: Muffe
- 15: Querrohr
- 16: Scherstift
- 17: Kegelradgetriebe
- 18: Halterung
- 19: Hydraulikleitung
- 20: Spritzwand
- 21: Fußablage
- 22: Kupplungsbowdenzug
- 23: Zweikreishauptbremszylinder
- 24: Draht
- 25: Mantel
- 26: Käfig
- 27: Stütze
- 28: Querrohr
- 29: Querrohr
- 30: Lenksäule
- 31: Rückwand
- 32: Fahrzeugaußenwand
- 33: Mitteltunnel
- 34: Führung
- 35: Bodenplatte

## Patentansprüche

1. Pedalanordnung für Kraftfahrzeuge mit einem an einem in Fahrzeuglängsrichtung verschiebbaren Schlitten (6) gehaltenen Pedal (1) zum Bedienen einer Betätigungseinrichtung, beispielsweise eines Hauptbrems- oder eines Kupplungsgeberzylinders (2), eines Kupplungsbowdenzugs (22) oder eines Gaszugs, des Kraftfahrzeugs, **dadurch gekennzeichnet**, daß die Betätigungseinrichtung ebenfalls an dem verschiebbaren Schlitten (6) gehalten ist.

2. Pedalanordung nach Anspruch 1, dadurch gekennzeichnet, daß an dem Schlitten (6) ein Gaspedal (1a), ein Bremspedal (1b) und gegebenenfalls ein Kupplungspedal (1c) gehalten ist.

3. Pedalanordung nach Anspruch 2, dadurch gekennzeichnet, daß an dem Schlitten (6) zusätzlich eine Fußablage (21) gehalten ist.

4. Pedalanordung nach einem der Ansprüche 1 bis 3, dadurch gekennzeichnet, daß der Schlitten (6) mittels Spindeltrieb (10) oder eines Druckmittelzylinders verschiebbar ist.

5. Pedalanordung nach einem der Ansprüche 1 bis 4, dadurch gekennzeichnet, daß der Schlitten (6) einen Käfig (26) aufweist, in dem die Pedale (1) angeordnet sind, und daß der Käfig (26) eine Bodenplatte (35) aufweist, die mit dem Käfig (26) durch Verfahren des Käfigs (26) absenkbar oder anhebbar ist.

6. Pedalanordung nach einem der Ansprüche 1 bis 5, dadurch gekennzeichnet, daß der Schlitten im Falle eines Verkehrsunfalls derart bewegbar, insbesondere verschwenkbar, ist, daß das Pedal bzw. die Pedale (1) vom Fahrer weg zur Spritzwand (20) bewegbar, insbesondere schwenkbar, ist/sind.

7. Pedalanordung nach einem der Ansprüche 1 bis 6, dadurch gekennzeichnet, daß die Betägigungseinrichtung mit flexiblen Leitungen (19) bzw. Schläuchen mit anzusteuernden Aggregaten verbunden ist.
